# FASCICULE DE BREVET EUROPEEN

(11) **EP 0 354 149 B1**
(45) Date de publication et mention de la délivrance du brevet: **20.01.1993**
(21) Numéro de dépôt: 89430017.7
(22) Date de dépôt: 20.06.1989
(51) Int. Cl.: F16B 5/06

(54) **Procédé et dispositif de jonction étanche de panneaux exposés au ruissellement**
Verfahren und Vorrichtung zum dichten Verbinden von Beregnung ausgesetzten Platten
Process and device for the sealed connection of plates exposed to rain

(30) Priorité: 21.06.1988 FR 8808481
(43) Date de publication de la demande: 07.02.1990
(73) Titulaire: HOLDING DURANCE LUBERON S.A.R.L., FR-84120 Pertuis (FR)
(72) Inventeur: Joseph, Jean-Pierre, F-84120 Pertuis (FR)
(74) Mandataire: Marek, Pierre, Cabinet Marek

(56) Documents cités:
- CH-A- 455 536
- DE-A- 3 323 778
- FR-A- 2 557 932
- FR-B- 2 425 009
- GB-A- 1 567 008

## Description

La présente invention concerne un procédé de jonction étanche de panneaux de type "sandwich" destinés à constituer des couvertures exposées au ruissellement pluvial telles que couvertures de toitures, de terrasses, de balcons, de galeries, bardages , etc, ces panneaux comportant une âme en mousse rigide de matière plastique disposée entre deux parements rigides. D'une manière générale, l'invention est applicable à la réalisation de surfaces ou parois ayant des affectations diverses et exposées au ruissellement, ces surfaces ou parois pouvant être disposées sensiblement horizontalememt, plus ou moins inclinées, ou dressées verticalement.

L'invention concerne également un dispositif comprenant un profilé spécial, permettant la mise en oeuvre de ce procédé.

Les procédés classiques de construction de surfaces appelées à être exposées à lu pluie telles que couvertures de toitures ou de terrasses, utilisant des panneaux de type sandwich, consistent généralement à juxtaposer ces panneaux et à recouvrir les entrées supérieures des interstices avec un matériau ou avec un élément destiné à assurer l'étanchéité.

Ces procédés ont notamment pour inconvénients de créer des reliefs inesthétiques à la surface des couvertures. Ces reliefs constituent également de petits obstacles gênant plus ou moins le déplacement sur les surfaces ainsi rendues étanches. Enfin, ces moyens d'étanchéité ont habituellexent une durée de vie et d'efficacité assez limitée car ils résistent mal aux éléments climatiques et au passage, et se désagrègent assez rapidement.

On connaît (FR-B-2.425.009, FR-A-2.557.932), un procédé de jonction de panneaux sandwich constitués de deux peaux rigides contrecollées sur une âme isolante réalisée en mousse plastique, suivant lequel une fausse languette exécutée dans des matériaux identiques est encastrée et, de préférence collée, dans des rainures ménagées dams les côtés des deux panneaux adjacents. Une telle méthode n'offre aucune garantie d'étanchéité à la jonction des panneaux.

On connaît également (CH-A-455.536) un procédé d'assemblage de profilés métalliques en forme de caissons, suivant lequel une tringle de jonction comportant latéralement des ailettes de retenue est engagée dans des rainures ménagées dans les côtés desdits profilés, ces rainures étant délimitées par deux baguettes longitudinales en forme de crochets destinées à s'accrocher sur les ailettes de retenue de la tringle de jonction qui assure ainsi l'assemblage des profilés. Cette méthode d'assemblage n'est pas destinée à assurer l'étanchéité à la jonction des profilés tels que ridelles ou analogues, tandis qu'elle n'est pas transposable à l'assemblage de panneaux de type sandwich.

Le procédé et le dispositif selon l'invention ont plus particulièrement pour but de remédier aux inconvénients et insuffisances des procédés d'assemblage connus de panneaux de type sandwich.

Suivant l'invention, cet objectif est atteint grâce à un procédé et à un dispositif selon lequel les panneaux dont les chants sont pourvus d'une rainure longitudinale ménagée dans leur âme en mousse rigide, sont juxtaposés et assemblés au moyen d'une gouttière de jonction que l'on encastre, par l'intermédiaire de ses côtés opposés, dans les rainures de deux panneaux accolés, cette gouttière de jonction étant constituée par un profilé comportant un canal s'étendant d'un bout à l'autre dudit profilé et une ouverture médiane longitudinale débouchant dans ledit canal et orientée vers l'extérieur, cette ouverture étant disposée dams le plan d'une portion d'un interstice ménagé entre lesdits panneaux accolés, placée sur le côté extérieur de ladite gouttière de jonction.

De la sorte, le profilé de jonction des panneaux forme une gouttière qui peut recevoir l'eau qui s'infiltre ou s'écoule entre lesdits panneaux et qui permet d'acheminer l'eau recueillie en direction du bord inférieur de la couverture ou autre surface ou paroi ainsi réalisée.

Grâce au procédé et au dispositif selon l'invention, on assure la jonction parfaitement étanche des panneaux, au moyen d'un élément robuste, inaltérable et dont la mise en oeuvre est très facile. En outre, cet assemblage met en oeuvre des panneaux et un élément de jonction qui peuvent avoir avantageusement des formes ou profils extrêmement simples.

La durée de vie de cet assemblage étanche peut être considérée comme au moins égale à celle de la couverture ou du bâtiment qui en comporte application. L'élément de jonction étanche est totalement inapparent, de sorte que la surface des couvertures ou autres surfaces ou parois est parfaitement plane et ne comporte aucun relief inesthétique.

Les buts, caractéristiques et avantages ci-dessus, et d'autres encore, ressortiront mieux de la description qui suit et des dessins annexés dans lesquels:

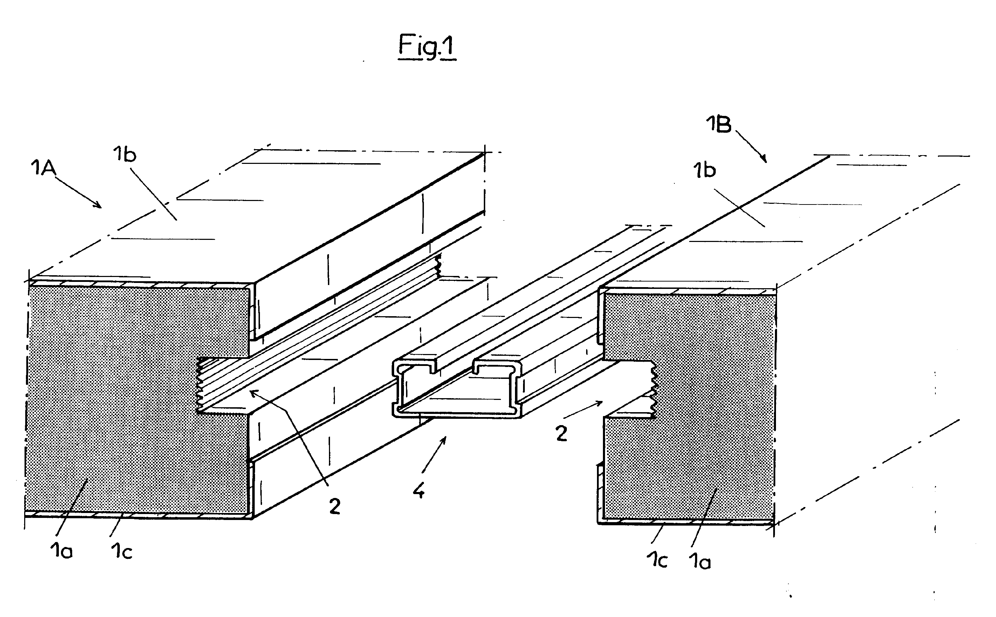

La figure 1 est une vue partielle, en perspective, montrant les bords adjacents de deux panneaux et la gouttière de jonction permettant leur assemblage étanche, suivant le procédé de l'invention.

La figure 2 est une vue en coupe transversale montrant les bords adjacents de ces deux panneaux et la gouttière de jonction, avant l'assemblage.

La figure 3 est une vue en coupe transversale analogue à la figure 2 et montrant les panneaux après assemblage au moyen de la gouttière de jonction.

La figure 4 est une vue en coupe transversale et à plus grande échelle de la gouttière de jonction.

On se reporte auxdits dessins pour décrire un exemple de aise en oeuvre intéressant, quoique nullement limitatif, du procédé et du dispositif selon l'invention.

Le procédé de l'invention est destiné à permettre la jonction étanche de plaques ou panneuux de type sandwich, de dimensions et de natures diverses, utilisables pour constituer des couvertures de toitures ou autres surfaces ou parois.

De manière avantageuse, l'une des dimensions de ces panneaux correspond sensiblement à l'une des dimensions de la surface à recouvrir. Par exemple, si l'on considéré une toiture à deux pentes, plus ou moins inclinées, chaque panneau aura une dimension correspondant sensiblement à la distance comprise entre le bord le plus haut et le bord le plus bas des pentes de ladite toiture. Pour cette raison, les panneaux ont le plus souvent une forme rectangulaire.

On a représenté, sur les dessins, une application très intéressante de l'invention à l'assemblage étanche de panneaux isolants 1A, 1B, de type "sandwish", principalement constitués d'une âme 1a en mousse rigide de matière plastique telle que polyuréthane, chlorure de polyvinyle, etc., disposée entre deux parements rigides 1b, 1c, par exemple formés par des plaques d'acier ou d'aluminium laquées ou recouvertes de tout autre revêtement souhaitable. Ces parements 1b, 1c pourraient être exécutés en tout autre natériau tel que polyester armé ou autre.

Les parements 1b, 1c ont des bords 1d, le pliés et rabattus contre les chants 1f de l'âme rigide la, sur une portion de la hauteur de ces derniers, afin de protéger les arêtes de ladite âme. On précise toutefois que les bords des panneaux pourraient avoir toute autre forme ou profil, y compris des formes permettant un emboîtement desdits bords.

Dans deux chants opposés des panneaux, et dams l'âme en mousse rigide 1a de ces derniers, est ménagée une rainure 2 ayant, de préférence, une section rectangulaire ou carrée et dont le fond est avantageusement pourvu de stries 3 ou autres aspérités. Compte tenu du mode d'utilisation précédemment évoqué des pamneaux, les rainures 2 sont généralement ménagées dans les chants longitudinaux desdits panneaux.

Selon le procédé de l'invention, l'assemblage des panneaux est réalisé au moyen d'une gouttière de jonction 4 avantageusement exécutée en aluminium et s'encastrant, par l'intermédiaire de ses côtés opposés, dans les rainures 2 de deux pamneaux accolés.

Cette gouttière de jonction est constituée par un profilé conformé et dimensionné pour pouvoir s'encastrer dans les rainures 2 de deux panneaux justaposés 1A, 1B, ce profilé comportant un canal longitudinal 5 s'étendant d'un bout à l'autre dudit profilé, et une ouverture médiane longitudinale 6 opposée à son fond 4a et débouchant dans ledit canal.

De manière avantageuse, ce profilé présente, en section, une forme sensiblement rectangulaire, et il comporte : un fond 4a, deux parois latérales 4b perpendiculaires audit fond et deux ailes 4c de largeur égale, disposées au-dessus de celui-ci et rattachées auxdites parois latérales, les bords internes de ces ailes étant séparés par l'ouverture ou fente longitudinale médiane 6. Les bords internes 4d des ailes 4c sont pliés en direction du fond 4a. D'autre part, les parois latérales 4b sont pourvues d'une cavité ou enfonçure longitudinale externe 4e.

La largeur du profilé de jonction 4 est un peu supérieure (par exemple de l'ordre de 3 à 5 mm) au double de la profondeur de la rainure 2 des panneaux.

La mise en oeuvre du procédé de l'invention s'opère de la manière suivante.

On installe et on fixe un premier panneau (par exemple le panneau 1A).

De manière préférée, on pose un cordon de mastic souple 7 ou autre matériau souple d'étanchéité, sur une ou plusieurs des surfaces suivantes :
- face externe des bords pliés 1d, 1e des parements 1b, 1c, respectivement, du panneau 1A ;
- fond de rainure 2 du panneau 1A et/ou fond de l'enfonçure 4e du profilé 4 orientée face à ladite rainure.

On encastre ensuite à force l'un des côtés de la gouttière de jonction 4 dans la rainure 2 du panneau 1A, ladite gouttière de jonction étant disposée de façon que son ouverture longitudinale soit orientée vers l'extérieur de la construction, c'est-à-dire vers le haut lorsque les panneaux sont appelés à constituer une couverture de toiture.

On pose un cordon de mastic souple ou autre matériau souple d'étanchéité dans l'enfonçure 4e opposée de la gouttière de jonction.

On met ensuite en place le panneau suivant 1B en le pressant mécaniquement à l'aide de tous moyens de serrage connus, contre le panneau précédemment installé, de façon que le côté opposée du profilé de jonction viennent s'encastrer dans la rainure 2 dudit panneau 1B.

A la suite de cet assemblage, un interstice longitudinal 8 permettant la dilatation des panneaux 1A, 1B se trouve ménagé entre les chants adjacents de ces derniers.

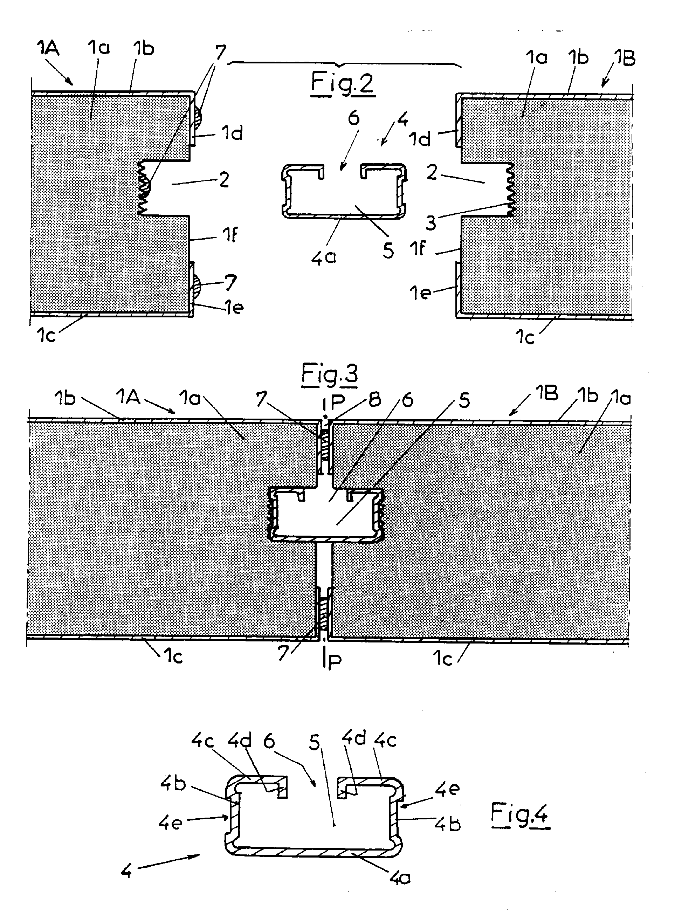

L'ouverture longitudinale supérieure (6) du canal (5) de la gouttière de jonction (4) se trouve placée dans le plan P-P d'une portion de l'interstice 8 subsistant entre les panneaux accolés 1A, 1B (figure 3) et disposée sur le côté extérieur de ladite gouttière de jonction. Suivant l'exemple illustré, l'ouverture 6 se trouve placée dans le plan P-P et au-dessous de la portion supérieure de l'interstice 8, celui-ci étant normalement obturé à sa partie disposée sur le côté externe des rainures 2 et à sa partie disposée sur le côté interne desdites rainures, par les cordons de mastic souple 7 ou autre matériau ou élément d'étanchéité.

Ces cordons souples 7 et notamment celui qui se trouve comprimé entre les surfaces latérales de la gouttière de jonction et le fond pourvu de stries 3 des rainures 2, constituent un premier dispositif d'étanchéité efficace et durable, notamment en raison du fait qu'ils sont inapparents et peu exposés aux agents ou contacts susceptibles de hâter leur destruction.

Dans certaines applications, la portion externe et, surtout, la portion interne de l'interstice 8, pourraient être obturées par un joint bi-dureté en arête de poisson, connu en soi, à la place des cordons de mastic souple 7. Ces joints ont, en effet, sur ces derniers, l'avantage de pouvoir être posés plus facilement.

On continue le montage de la couverture ou autre surface ou paroi, de la même manière que ci-dessus, pour la mise en place des panneaux suivants.

Dans l'application à la réalisation de couverture, les panneaux et, par conséquent, les gouttières de jonction sont mis en place avec une inclinaison qui est fonction de l'inclinaison de la toiture ou autre surface dont lesdits panneaux constituent la couverture. Toutefois, on doit respecter une pente minimum d'environ 5 % pour les toitures ou autre plans ayant l'aspect de surfaces approximativement planes.

On comprend que grâce au procédé et au dispositif selon l'invention l'eau qui s'infiltre ou s'écoule entre les panneaux, est recueillie par la gouttière de jonction et acheminée par celle-ci jusqu'en bordure basse de la couverture ou autre surface ou paroi constituée par lesdits panneaux, d'où elle peut être évacuée par les moyens classiques (chéneau ou autre). Cette gouttière de jonction constitue ainsi un dispositif d'étanchéité très efficace.

## Revendications

1. Procédé de jonction étanche de panneaux de type "sandwich" exposés au ruissellement, et formés d'une âme en mousse rigide de matière plastique (1a) disposée entre deux parements rigides (1b, 1c), suivant lequel un organe de liaison (4) est encastré dans des rainures longitudinales (2) ménagées dans au moins deux chants parallèles (1f) et dans l'âme (1a) de deux panneaux juxtaposés (1A, 1B), caractérisé en ce que l'on utilise, pour constituer ledit organe de liaison, une gouttière de jonction (4) qu l'on encastre, par l'intermédiaire de ses côtés opposés, dans les rainures (2) des deux panneaux accolés (1A, 1B), de manière que son ouverture longitudinale (6) se trouve orientée vers l'extérieur et placée dans le plan (P-P) d'une portion d'un interstice (8) ménagé entre lesdits panneaux, disposée sur le côté extérieur de ladite gouttière de jonction.

2. Procédé de jonction étanche de panneaux suivant la revendication 1, caractérisé en ce que le fond des rainures (2) des panneaux (1A, 1B) est pourvu de stries (3) ou autres aspérités contre lesquelles sont pressées les faces externes des parois latérales (4b) de la gouttière de jonction (4), lors de l'assemblage desdits panneaux.

3. Procédé de jonction étanche de panneaux suivant l'une des revendications 1 ou 2, caractérisé en ce que l'on pose un cordon de mastic souple (7) ou autre matériau souple d'étanchéité, entre les faces externes des parois latérales (4b) de la gouttière de jonction (4) et le fond des rainures (2) des panneaux (1A, 1B), avant assemblage de ces derniers.

4. Procédé de jonction étanche de panneaux selon l'une quelconque des revendications 1 à 3, caractérisé en ce que l'on pose au moins un cordon de mastic souple (7) ou autre matériau souple d'étanchéité entre les chants (1d-1e-1f) des panneaux accolés (1A, 1B), avant l'assemblage de ces derniers ; ce cordon de mastic ou l'un de ces cordons de mastic souple (7) étant disposé entre une portion desdits chants disposés sur le côté externe des rainures (2) desdits panneaux.

5. Dispositif de jonction étanche de panneaux de type "sandwich" exposés au ruissellement, comprenant des panneaux (1A, 1B) constitués d'une âme (1a) en mousse rigide de matière plastique disposés entre deux parements rigides (1b, 1c) et dont au moins deux chants parallèles sont pourvus d'une rainure longitudinale (2) ménagée dans ladite âme de mousse rigide (1a), et un organe de liaison (4) destiné à être encastré dans lesdites rainures de deux panneaux juxtaposés (1A, 1B) de façon à assurer l'assemblage desdits panneaux, caractérisé en ce que ledit organe de liaison est constitué par une gouttière de jonction (4) constituée par un profilé comportant un canal (5) s'étendant d'un bout à l'autre dudit profilé et une ouverture médiane longitudinale (6) débouchant dans ledit canal ; ledit profilé étant dimensionné et conformé pour pouvoir s'encastrer dans les rainures (2) et dans l'âme (1a) de mousse plastique rigide de deux panneaux juxtaposés (1A, 1B).

6. Dispositif de jonction étanche de panneaux, selon la revendication 5, caractérisé en ce que les rainures (2) des panneaux ont une section rectangulaire ou carrée, et en ce que la gouttière de jonction (4) a une section sensiblement rectangulaire ; la largeur de cette gouttière étant un peu supérieure au double de la profondeur desdites rainures.

7. Dispositif de jonction étanche de panneaux suivant l'une des revendications 5 ou 6, caractérisé en ce que les parements (1b, 1c) rigides des panneaux (1A, 1B) sont constitués par des plaques métalliques laquées.

8. Dispositif de jonction étanche de panneaux selon l'une quelconque des revendications 5 à 7, caractérisé en ce que le fond des rainures (2) des panneaux (1A, 1B) est pourvu des tries (3) ou autres aspérités.

9. Dispositif de jonction de panneaux suivant l'une quelconque des revendications 5 à 8, caractérisé en ce que les profilés constituant les gouttières de jonction (4) comportent : un fond (4a), deux parois latérales (4b) et deux ailes (4c) disposées au-dessus dudit fond et rattachées auxdites parois latérales ; les bords internes de ces ailes étant séparés par l'ouverture ou fente longitudinale médiane (6).

10. Dispositif de jonction étanche de panneaux suivant la revendication 9, caractérisé en ce que les parois latérales (4b) de la gouttière de jonction (4) sont pourvues d'une cavité longitudinale externe (4e).

11. Dispositif de jonction étanche de panneaux selon l'une quelconque des revendications 9 ou 10, caractérisé en ce que les bords internes (4d) des ailes supérieures (4c) de la gouttière de jonction (4) sont pliés en direction du fond (4a) de ladite gouttière.

## Patentansprüche

1. Verfahren zur dichten Verbindung von in Sandwich-Bauweise gebildeten Platten, die der Beregnung ausgesetzt sind und aus einem zwischen zwei starren Außenseiten (1b, 1c) angeordneten Kern aus Kunststoffhartschaum (1a) bestehen, gemäß dem ein Verbindungsorgan (4) in Längsnuten (2) eingelassen wird, die in mindestens zwei parallelen Kanten (1f) und im Kern (1a) zweier nebeneinanderliegender Platten (1A, 1B) vorgesehen sind,
**dadurch gekennzeichnet,** daß zur Bildung des Verbindungsorgans eine Verbindungsrinne (4) verwendet wird, die mittels ihrer gegenüberliegenden Seiten in die Nuten (2) der beiden nebeneinanderliegenden Platten (1A, 1B) derart eingelassen wird, daß ihre Längsöffnung (6) nach außen gerichtet ist und in der Ebene (P-P) eines Teils des zwischen den Platten vorgesehenen Zwischenraums (8) liegt, wobei dieser Teil auf der Außenseite der Verbindungsrinne angeordnet ist.

2. Verfahren zur dichten Verbindung von Platten nach Anspruch 1,
dadurch gekennzeichnet, daß der Boden der Nuten (2) der Platten (1A, 1B) mit Rillen (3) oder anderen Unebenheiten versehen ist, gegen die die Außenseiten der Seitenwände (4b) der Verbindungsrinne (4) bei der Verbindung der Platten gepreßt werden.

3. Verfahren zur dichten Verbindung von Platten nach einem der Ansprüche 1 oder 2,
dadurch gekennzeichnet, daß ein Strang aus elastischem Kitt (7) oder aus einem anderen elastischen Dichtungsmaterial zwischen die Außenseiten der Seitenwände (4b) der Verbindungsrinne (4) und den Boden der Nuten (2) der Platten (1A, 1B) vor deren Verbindung gelegt wird.

4. Verfahren zur dichten Verbindung von Platten nach einem der Ansprüche 1 bis 3,
dadurch gekennzeichnet, daß mindestens ein Strang aus elastischem Kitt (7) oder einem anderen elastischen Dichtungsmaterial zwischen die Kanten (1d-1e-1f) der nebeneinanderliegenden Platten (1A, 1B) vor deren Verbindung gelegt wird, wobei dieser Strang aus Kitt oder einer dieser Stränge aus elastischem Kitt (7) zwischen einem Abschnitt dieser Kanten aufgebracht ist, der auf der Außenseite der Nuten (2) der Platten angeordnet ist.

5. Vorrichtung zur dichten Verbindung von in Sandwich-Bauweise gebildeten und der Beregnung ausgesetzten Platten, umfassend Platten (1A, 1B), die aus einem Kern (1a) aus Kunststoffhartschaum, angeordnet zwischen zwei starren Außenseiten (1b, 1c), gebildet sind, wobei wenigsten zwei parallele Kanten mit einer im Hartschaumkern (1a) vorgesehenen Längsnut (2) versehen sind, sowie ein Verbindungsorgan (4), das in die Nuten der nebeneinanderliegenden Platten (1A, 1B) derart eingelassen wird, daß die Verbindung dieser Platten gewährleistet ist, dadurch gekennzeichnet, daß das Verbindungsorgan aus einer Verbindungsrinne (4) gebildet ist, die aus einem Profil mit einem Kanal (5), der sich von einem Ende bis zum anderen Ende des Profils erstreckt, und einer in der Mitte angeordneten Längsöffnung (6) besteht, die sich in den Kanal (5) öffnet, wobei das Profil derart bemessen und angepaßt ist, daß es in die Nuten (2) und in den Kern (1a) aus Hartschaumkunststoff der beiden nebeneinanderliegenden Platten (1A, 1B) eingelassen werden kann.

6. Vorrichtung zur dichten Verbindung von Platten nach Anspruch 5,
dadurch gekennzeichnet, daß die Nuten (2) der Platten einen rechteckigen oder quadratischen Querschnitt aufweisen und daß die Verbindungsrinne (4) einen in etwa rechteckigen querschnitt aufweist, wobei die Breite dieser Verbindungsrinne etwas mehr als die doppelte Tiefe der Nuten beträgt.

7. Vorrichtung zur dichten Verbindung von Platten nach einem der Ansprüche 5 oder 6,
dadurch gekennzeichnet, daß die starren Außenseiten (1b, 1c) der Platten (1A, 1B) aus lackierten Metallplatten bestehen.

8. Vorrichtung zur dichten Verbindung von Platten nach einem der Ansprüche 5 bis 7,
dadurch gekennzeichnet, daß der Boden der Nuten (2) der Platten (1A, 1B) mit Rillen (3) oder anderen Unebenheiten versehen ist.

9. Vorrichtung zur dichten Verbindung von Platten nach einem der Ansprüche 5 bis 8,
dadurch gekennzeichnet, daß die die Verbindungsrinnen (4) bildenden Profile einen Boden (4a), zwei Seitenwände (4b) und zwei oberhalb des Bodens angeordnete und mit den Seitenwänden verbundene Leisten (4c) aufweisen, wobei die Innenkanten der Leisten durch die in der Mitte gelegene Längsöffnung bzw. den in der Mitte gelegenen Längsschlitz (6) getrennt sind.

10. Vorrichtung zur dichten Verbindung von Platten nach Anspruch 9,
dadurch gekennzeichnet, daß die Seitenwände (4b) der Verbindungsrinne (4) mit einer äußeren Längsaussparung (4e) versehen sind.

11. Vorrichtung zur dichten Verbindung von Platten nach einem der Ansprüche 9 oder 10,
dadurch gekennzeichnet, daß die Innenkanten (4d) der oberen Leisten (4c) der Verbindungsrinne (4) in Richtung des Bodens (4a) der Rinne gebogen sind.

## Claims

1. Method for seal-jointing sandwich-type panels exposed to surface water and made up of a web of rigid foamed plastic (1a) arranged between two rigid faces (1b, 1c), wherein a connector (4) is rebated in longitudinal grooves (2) made in at least two parallel narrow sides (1f) and in the web (1a) of two juxtaposed panels (1A, 1B),
characterised in that a jointing gutter (4) is used to make up said connector and is rebated by its opposite sides in the grooves (2) on the two attached panels (1A, 1B), in such a way that its longitudinal aperture (6) faces outwards and is positioned in the plane (P-P) of a section of a gap (8) incorporated between said panels, said section being disposed on the outer face of said jointing gutter.

2. Method for seal-jointing panels according to claim 1, characterised in that the base of the grooves (2) on the panels (1A, 1B) is provided with serrations (3) or otherwise roughened, against which the outer faces of the side walls (4b) of the jointing gutter (4) are pressed when assembling said panels.

3. Method for seal-jointing panels according to either of claims 1 or 2, characterised in that a ribbon of flexible mastic (7) or other flexible sealing compound is placed between the outer faces of the side walls (4b) of the jointing gutter (4) and the base of the grooves (2) on the panels (1A, 1B), prior to assembling the latter.

4. Method for seal-jointing panels according to any of claims 1 to 3, characterised in that at least one ribbon of flexible mastic (7) or other flexible sealing compound is placed between the narrow sides (1d-1e-1f) of the attached panels (1A, 1B), prior to assembling the latter; said ribbon of mastic or one of said ribbons of flexible mastic (7) being disposed between a section of said narrow sides disposed on the outer face of the grooves (2) in said panels.

5. Device for seal-jointing sandwich-type panels exposed to surface water, comprising panels (1A, 1B) constituted by a web (1a) of rigid foamed plastic disposed between two rigid faces (1b, 1c) and at least two parallel narrow sides of which are provided with a longitudinal groove (2) made in said web of rigid foamed plastic (1a), and a connector (4) designed to be rebated in said grooves of two juxtaposed panels (1A, 1B) so as to enable said panels to be assembled,
characterised in that said connector is constituted by a jointing gutter (4) constituted by a profile having a channel (5) extending from one end to the other of said profile and a median longitudinal aperture (6) which opens out into said gutter; said profile being dimensioned and configured to be rebated into the grooves (2) and in the rigid foamed plastic web (1a) of two juxtaposed panels (1A, 1B).

6. Device for seal-jointing panels according to claim 5, characterised in that the grooves (2) of the panels are rectangular or square in section, and that the jointing gutter (4) is substantially rectangular in section; the width of said jointing gutter being slightly more than twice the depth of said grooves.

7. Device for seal-jointing panels according to either of claims 5 or 6, characterised in that the rigid faces (1b, 1c) of the panels (1A, 1B) are constituted by lacquered metal plates.

8. Device for seal-jointing panels according to any of claims 5 to 7, characterised in that the base of the grooves (2) on the panels (1A, 1B) is provided with serrations (3) or otherwise roughened.

9. Device for seal-jointing panels according to any of claims 5 to 8, characterised in that the profiles constituting the jointing gutters (4) comprise: a base (4a), two side walls (4b) and two wings (4a) disposed above said base and fastened to said side walls; the inner edges of said wings being separated by the median longitudinal aperture or slot (6).

10. Device for seal-jointing panels according to claim 9, characterised in that the side walls (4b) of the jointing gutter (4) are provided with an external longitudinal cavity (4e).

11. Device for seal-jointing panels according to either of claims 9 or 10, characterised in that the inner edges (4d) of the upper wings (4c) of the jointing gutter (4) are folded towards the base (4a) of said gutter.
